# EUROPEAN PATENT APPLICATION

(11) **EP 2 033 793 A1**
(43) Date of publication of application: **11.03.2009**
(21) Application number: 08004587.5
(22) Date of filing: 12.03.2008
(51) Int. Cl.: B41J 3/407

(54) **Label printer and data transmitting method**

(30) Priority: 10.09.2007 JP 2007234082
(71) Applicant: Toshiba TEC Kabushiki Kaisha, Tokyo 141-8664 (JP)
(72) Inventor: Sugiyama, Makoto, Tokyo 141-8664 (JP)
(74) Representative: Kramer - Barske - Schmidtchen

(57) **Abstract**

A memory (63) stores a data set which includes printing data (410, DL₁) and RFID data (411, DR₂) to be output to a label (203) which includes a RFID tag (206), and a controller (50) executes control to convey a label sheet (201), on which a label (203) including a RFID tag (206) is affixed, on a conveying path (151) where a RFID reader/writer (121) is positioned at an upstream side and a printer (120) is positioned at a downside side, executes control to write information to a RFID tag (R₂) included in a second label (L₂) positioned upstream of a first label (L₁) on the conveying path based on RFID data ([0002R]) included in a data set (D₂) corresponding to the second label, then, executes control to print on the first label (L₁) based on printing data ([0001L]) included in a data set (D₁) corresponding to the first label (L₁).

## Description

### BACKGROUND OF THE INVENTION

### FIELD OF THE INVENTION

The present invention relates to a label printer for executing printing and data writing on a label, which includes a RFID tag, and data transmitting method which is executed by the computer.

### DISCUSSION OF THE BACKGROUND

Conventionally, a technology for putting a RFID tag on a lengthy base sheet has been developed. In accordance with this development, a label printer which includes not only a printing mechanism but also a RFID communication mechanism for writing data to the RFID has been developed. Such the label printer provides a printer, which is composed of a thermal head and so on, and a RFID reader/writer, which executes a RFID communication. It is common that the RFID reader/writer is located at a more upstream side than the printer on a conveying path of the label sheet. What is more, the RFID reader/writer and the thermal head are placed separate in order not to interfere each other.

The label printer receives from a computer a data set which includes RFID data and printing data, and executes a writing and printing to the label based on the received data set, and issues a printed label.

As an example, a label printer disclosed in a patent document 1 (Japanese Laid-Open Publication No. 2006-272844) provides a RFID reader/writer at an upstream part on a conveying path where a continuous label, on which a label incorporating a RFID inlet is temporarily affixed, is conveyed, and a printer at a downstream part on the conveying path. The label printer, in the process of issuing a printed label, a next label is subject to position at a more downstream side than the RFID reader/writer on the conveying path when a preceding printed label is peeled at a peeling position. Therefore, after feeding back the label positioned at the downstream side to a RFID reading/writing part, the printer executes a data writing to the label' s RFID inlet and then feeds forward the label to a printing part and prints desired information, and feeds forward the printed label to the peeling position (see Paragraph 0010 of Japanese Laid-Open Publication No. 2006-272844). As explained above, in the label printer whose the printer and the RFID reader/writer positioned at a more upstream side than the printer on the conveying path are separate, a label goes forward and back between the printer and the RFID reader/writer in the process of printing and issuing a label.

The label printer disclosed in Japanese Laid-Open Publication No. 2006-272844 has a drawback such that every time issuing a piece of printed label, the label printer executes feeding back and feeding forward control of the label, RFID data writing and printing. It requires considerable time until all labels are issued. Therefore, label printing and issuance efficiency is not very good.

### SUMMARY OF THE INVENTION

Accordingly, an object of the present invention is to improve the label printing and issuance efficiency of the label printer which executes the data writing and printing to the label which provides a RFID tag.

According to a novel label printer of the present invention, including a conveying mechanism (141) for conveying a label sheet (201), which is such that a plurality of labels (203) including a RFID tag (206) are affixed on a lengthy base sheet (202) with a certain pitch in a longitudinal direction of the base sheet, via a conveying path(151), a printer (120) for executing a printing with respect to the label on the conveying path, a RFID reader/writer (121) which is provided upstream of the printer on the conveying path, for executing an information reading and writing respect to a RFID tag included in the label, and a communication interface (56) for executing a data transmitting and receiving with respect to an external device (60), characterized in that including a memory (53) for storing a plurality of data sets (401) which includes printing data (410, DL_{N}) to be printed on the label and RFID data (411, DR_{N}) to be written to the RFID tag received from the external device via the communication interface, and a controller (50) repeating a process of driving and controlling the RFID reader/writer so as to execute an information writing to the RFID tag (R₂) of a second label (203, L₂) positioned upstream of a first label (203, L₁) on the conveying path based on the RFID data (411, DR₂) included in the data set (D₂) corresponding to the second label, and then driving and controlling the printer so as to execute a printing on the first label based on the printing data (410, DL₁) included in the data set (D₁) corresponding to the first label.

According to a novel method of the present invention, for causing a computer (60) that transmits data via a communication interface (56) to a label printer (1) having a printing function to a label (203) based on printing data (410, DL_{N}) and an information writing function to a RFID tag (206) based on RFID data (411, DR_{N}) with respect to a label sheet (201) which is such that a plurality of the labels including the RFID tag are affixed on a length base sheet with a certain pitch in a longitudinal direction of the base sheet, the method executes (i) a step of corresponding printing data to be printed on the label and RFID data to be written to the RFID tag, and for storing the printing data and the RFID data to a memory (63) by every plurality of the labels, (ii) a step of transmitting to the label printer in sequence from the data stored in the memory the RFID data corresponding to the RFID tags included in the labels from a first label to be printed first to a label which is positioned between a printing stand-by position (P0) and an information writing position (W), and (iii) a step of repeating a process of transmitting to the label printer the RFID data (411, DR₂) corresponding to the RFID tag of a second label (203, L₂) positioned upstream of a first label (203, L₁) on the conveying path, and then transmitting to the label printer the printing data (410, DL₁) corresponding to the first label.

Another aspect of the novel method for causing a computer (60) that transmits data via a communication interface (56) to a label printer (1) having a printing function to a label (203) based on printing data (410, DL_{N}) and an information writing function to a RFID tag (206) based on RFID data (411, DR_{N}) with respect to a label sheet (201) which is such that a plurality of the labels including the RFID tag are affixed on a lengthy base sheet with a certain pitch in a longitudinal direction of the base sheet, the method executes (i) a step of corresponding printing data to be printed on the label and RFID data to be written to the RFID tag, and for storing the printing data and the RFID data to a memory (63) by every plurality of the labels, (ii) a step of transmitting to the label printer from the data stored in the memory in sequence one piece or more than one piece of the RFID data corresponding to the RFID data included in the labels from a first label to be printed first to a label positioned between a printing stand-by position (P0) and an information writing position (W), and (iii) a step of transmitting a data set which pairs up from the data stored in the memory the RFID data (411, DR₂) corresponding to the RFID tag of a second label (203, L₂) positioned upstream of a first label (203, L₁) on the conveying path and the printing data (410, DL₁) corresponding to the first label.

Further aspect of the novel program for causing a computer (60) that transmits data via a communication interface (56) to a label printer (1) having a printing function to a label (203) based on printing data (410, DL_{N}) and an information writing function to a RFID tag (206) based on RFID data (411, DR_{N}) with respect to a label sheet (201) which is such that a plurality of the labels including the RFID tag are affixed on a lengthy base sheet with a certain pitch in a longitudinal direction of the base sheet, the method executes (i) a step of corresponding printing data to be printed on the label and RFID data to be written to the RFID tag, and for storing the printing data and the RFID data to a memory (63) by every plurality of the labels, and (ii) a step of transmitting to the label printer altogether from the data stored in the memory a data set which pairs up a data set including the RFID data corresponding to one piece or more than one piece of the RFID tag included in the labels from a first label to be printed first to a label positioned between a printing stand-by position (P0) and an information writing position (W), and the RFID data (411, DR₂) corresponding to the RFID tag of a second label (203, L₂) positioned upstream of a first label (203, L₁) on the conveying path and the printing data (410, DL₁) corresponding to the first label.

### BRIEF DESCRIPTION OF THE DRAWINGS

A more complete appreciation of the present invention and many of the attendant advantages thereof will be readily obtained as the same becomes better understood by reference to the following detailed description when considered in connection with the accompanying drawings, wherein:
Fig. 1 is a schematic view showing a sketch of a label issuance process executed by a label printer as an embodiment of the present invention;
Fig. 2 is a cross sectional side view showing the label printer;
Fig. 3 is a block diagram showing a hardware structure of the label printer;
Fig. 4 is a schematic view showing a data structure of a data set stored in a memory;
Fig. 5 is an exterior perspective view showing a label sheet;
Fig. 6 is a flowchart showing a flow of the label issuance process of the label printer;
Fig. 7 is a schematic view showing an example of error pattern printed on a label;
Fig. 8 is a flowchart showing a flow of a data transmission process by a computer, which executes a data transmission to a label printer, as another embodiment of the present invention;
Fig. 9 is a flowchart showing a flow of a label issuance process of the label printer;
Fig. 10 is a flowchart showing a flow of a data transmission process by a computer, which executes data transmission to a label printer, as still another embodiment of the present invention;
Fig. 11 is a flowchart showing a flow of a label issuance process of the label printer;
Fig. 12 is a flowchart showing a flow of data transmission of a computer which executes data transmission to a label printer as still another embodiment of the present invention; and
Fig. 13 is a flowchart showing a flow of a label issuance process of the label printer.

### DETAILED DESCRIPTION OF THE PREFERRED EMBODIMENTS

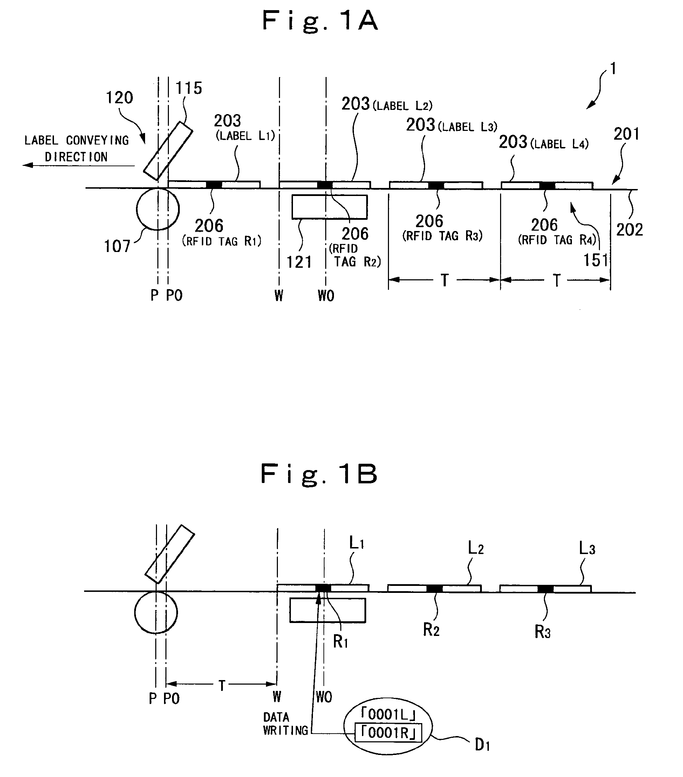

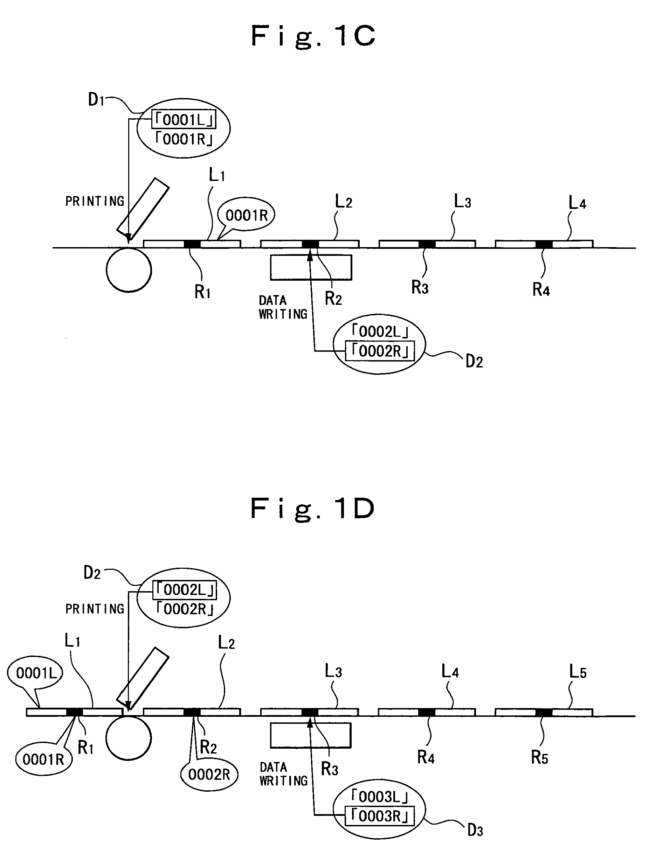

An embodiment of the present invention will be explained with reference to Figs. 1 to 7.

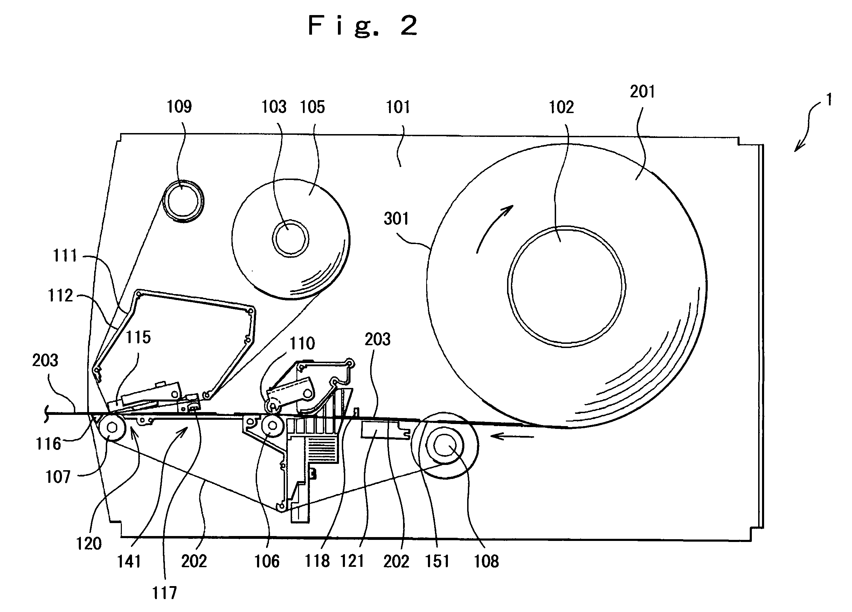

Fig. 1 is a schematic view showing a sketch of a label issuance process executed by a label printer 1 of the embodiment of the present invention. A conveying path 151 is formed inside the label printer 1. A label sheet 201 is composed in such a way that a plurality of labels 203 which includes a RFID tag 206 is stuck in series with a certain pitch in a longitudinal direction on a base sheet 202 and is conveyed along the conveying path 151 upon being received a conveying power from a conveying mechanism 141 (see Fig. 2). A RFID reader/writer 121 which executes a data communication between the RFID tag 206 is located at an upstream side in the conveying path 151 and a printer 120 which is composed of a thermal head 115, a platen 107 and so on and executes a printing to the label 203 is located at a upstream side of the conveying path 151.

The printer 120 executes a printing to the label 203, which stands by at a printing stand-by position P0 at a slightly upstream side of the conveying path 151 compared to a printing position P on the conveying path 151 where the thermal head 115 is located. The printing is executed in such a way that the thermal head 115 heats the label 203 when the label 203 passes by being driven by the conveying mechanism 141.

The FRID reader/writer 121 executes a data writing to the RFID tag 206 included in the label 203, which is located at a writing position W on the conveying path 151. To be more specific, the RFID reader/writer 121 is located in such a way that a position on the conveying path 151 where the RFID tag 206 included in the label 203 is positioned in the state that the label 203 is positioned at the writing position W accords with a writing central position W0 where a magnetic intensity generated from the RFID reader/writer 121 is the strongest. The RFID reader/writer 121 is capable of writing information to the RFID tag 206 even if the RFID tag 206 shifts to a slightly upstream position or a downstream position from the writing center position W0 on the conveying path 151 if the positions is within a range that the RFID reader/writer 121 is capable of executing close-distance radio communication. That is, the RFID reader/writer 121 is capable of writing predetermined information to the RFID tag 206 included in the label 203 which is located at the writing position W and its neighborhood area.

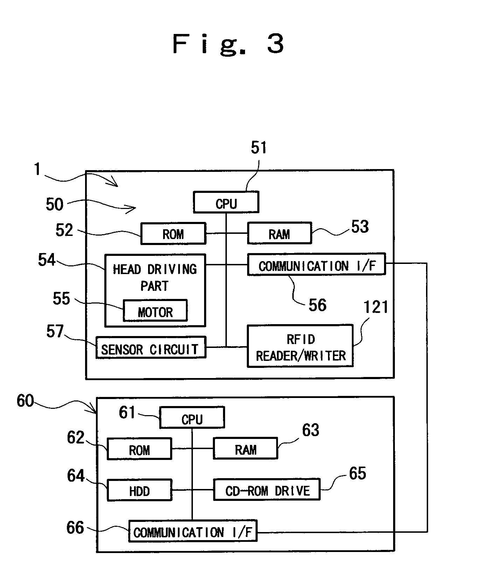

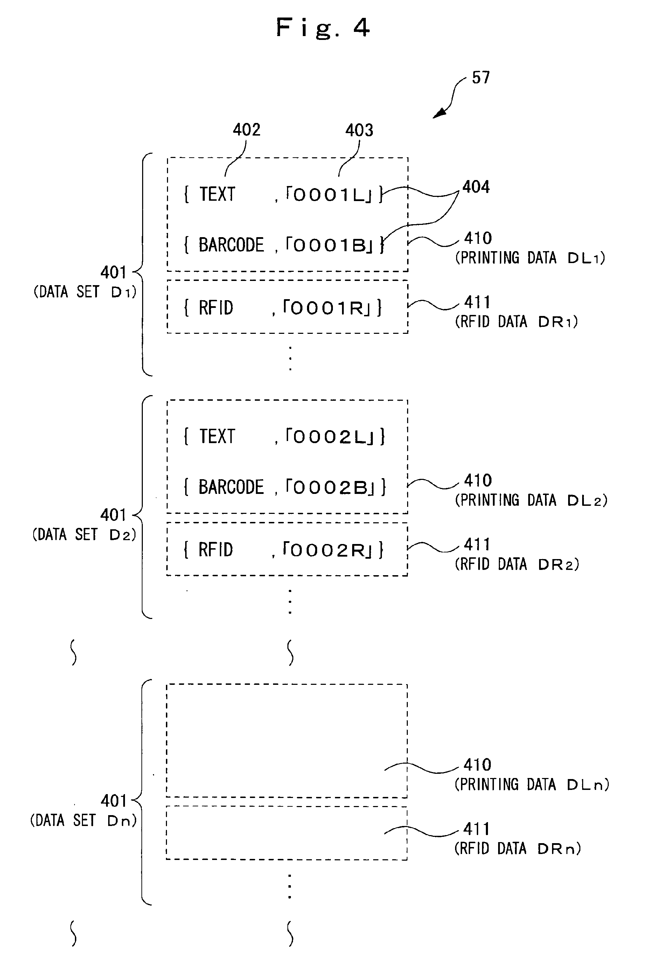

Printing data to be printed on the label 203 and RFID data to be written to the RFID tag 206 included in the label 203 constitute a part of a data set 401 (see Fig. 4) which corresponds to each label 203 affixed on the label sheet 201, and are stored in a RAM 53 (see Fig. 3) which stores various data.

A label issuance process of a label 203 (n=1, 2, 3, ···) being printed and issued will be explained with reference to Figs. 1(a) to (d), where [000nL] is printed on a printing surface of n^{th} label 203 and [000nR] is written to the RFID tag 206 in the order from the head of the label sheet 201. Here, in this explanation, the printing stand-by position P0 and the writing position W are separate each other by a distance T of the label 203 on the label sheet 201 (T is a location pitch of the label 203 on the label sheet 201).

Fig. 1(a) shows a state of the label printer 1 before the label issuance process being executed. In this state, the labels 203 on the conveying path 151 is called as L₁, L₂, L₃, ··· in the order of the head of the label sheet 201 which is positioned at the printing position P, and the RFID tags 206 included in the label L₁, L₂, L₃, ··· are called as RFID tags R₁, R₂, R₃, ···. Also, data sets D₁, D₂, D₃, ··· corresponding to the labels L₁, L₂, L₃, ··· are stored in the RAM 53, and the printing data [000nL] and the RFID data [000nR] are included in the data sets D₁, D₂, D₃, ···.

The label L₁, which was positioned at the printing stand-by position P0 before the label issuance process, is positioned to the writing position W by feeding back drive control of the conveying mechanism 141 (Fig. 2(b)) when the label issuance process is started. The RFID data [0001R] included in the data set D₁, which corresponds to the label L₁, is written to the RFID tag R₁ included in the label L₁ in a state that the label L₁ is positioned at the writing position W.

After writing the data to the RFID tag R₁, the label sheet 201 is conveyed to an upstream side by a distance T by the feeding forward drive control. When the label L₁ is positioned at the printing stand-by position P0, the label L₂ is positioned at the writing position W because the label L₁ and the label L₂ are separate by the distance T, which is the location pitch equivalent to the labels 203 on the label sheet 201. At this point, the RFID reader/writer 121 writes the RFID data [0002R], which is included in the data set D₂ corresponding to the label L₂, to the RFID tag R₂, which is included in the label L₂, and the printer 120 prints the printing data [0001L], which is included in the data set D₁ corresponding to the label L₁, to the label 1. Here, when the label L₁ is positioned at the printing stand-by position P0 while the label L₂ is positioned at a slightly shifted position from the writing position W, the label 201 is adjusted along the conveying path 151 by the feed forward control and the feeding back control of the conveying mechanism 141. Then, when the label L₂ is positioned at the writing position W, the RFID reader/writer 121 writes the data [0002R] to the RFID tag R₂, and then when the label L₁ is positioned at the printing stand-by position P0 by the conveying mechanism 141 again, the printer 120 prints the printing data [0001L] to the label L₁. After the data writing and printing are executed, the label sheet 201 receives the feeding forward control by the distance T by the conveying mechanism 141. As a result, the label L₂ is positioned at the printing stand-by position P0, and the label L₃ is positioned at the writing position W (Fig. 1(d)).

In the above explanation of the label issuance process, the printing stand-by position P0 and the writing position W are separate by the location pitch of T of the labels 203 on the label sheet 201. However, even when the printing stand-by position P0 and the writing position W are separate more than the distance T, it is also possible to execute the process in a similar manner. For instance, when the printing stand-by position P0 and the writing position W are separate by a distance of 2T, the label L₁ is positioned at the printing stand-by position P0 while the label L₃ is positioned at the writing position W. And RFID data [0003R], which is included in a data set D₃, is written to the RFID tag R₃, and the printing data [0001L], which is included in the data set D₁, is printed on the printing surface of the label L₁. Similarly, even when the distance between the printing stand-by position P0 and the writing position W is not integral multiple of the distance T, the RFID reader/writer 121 can execute a writing to a RFID tag 206 which is positioned within a communicatable range. Or, after the label 203 is positioned at the writing position W by a position adjustment of the conveying mechanism 141, data is written to the RFID tag 206 included in the label 203.

A structure of the label printer 1 which realizes such the label issuance process will be explained hereinafter.

Fig. 2 shows a cross sectional side view of the label printer 1. The label printer 1 has a printer main body 101. An end of a label sheet holding shaft 102 and an end of an ink ribbon holding shaft 103 as holders are fixed to the printer main body 101. The label sheet holding shaft 102 holds the rolled label sheet 201 rotatably, and the ink ribbon holding shaft 103 holds the rolled ink ribbon 105 rotatably. The label sheet 201 consists of a lengthy base sheet 202 on which labels 203 are affixed with a certain distance. The RFID tag 206 consisting of an IC chip and an antenna is disposed in each of the labels 203.

The label printer 1 provides the conveying mechanism 141, the printer 120 and the RFID reader/writer 121. Further, the label printer 1 provides a reflection type sensor 117, which constitutes a printing position detector, and a reflection type sensor 118, which constitutes a writing position detector. These sensors are used for determining a position of the label 203 when the conveying mechanism 141 conveys the label sheet 201.

The conveying mechanism 141 is composed of a conveying roller 106, a pinch roller 110, a platen 107, a thermal head 115, a motor 55 and so on, and provides a conveying power to the rolled label 201 held at the label sheet holding shaft 102 to be pull out and conveyed. To be more specific, ends of the conveying roller 106 which is connected to the motor 55 and rotatably driven, the platen 107, a re-winder 108 and the ribbon winder shaft 109 are rotatably held to the printer main body 101, and the pinch roller 110 contacts with an outer surface of the conveying surface 106 by a certain pressure. Further, a head block 111, which is composed of a casing 112 whose lower end of the platen 107 side is open, and the thermal head 115 which contact with an outer surface of the platen 107, is fixed to the printer main body 101 at a position adjacent to the platen 107.

The label sheet 201 pull out from its rolled state is traveled between the conveying roller 106 and the pinch roller 110, and then between the platen 107 and the thermal head 115. That is, the conveying path 151 through which the label sheet 201 is conveyed as explained above is formed in the label printer 1. After the label sheet 201 passes between the platen 107 and the thermal head 115, the base sheet 202 of the label sheet 201 is bent at a label separator 116 and then rolled up by the re-winder 108, and the label 203 is peeled from the base sheet 202 and goes straight. Meanwhile, the rolled ink ribbon 105 held by the ink ribbon holding shaft 103 is pull out from its rolled state, and then traveled between the platen 107 and the thermal head 115 and is rolled up to the ribbon winder shaft 109.

The printer 120 prints printing data transmitted from a CPU 51 to the label 203, which is positioned at the printing stand-by position P0 on the conveying path 151, on a receipt of a printing instruction from a CPU 51 described later (see Fig. 3). The printer 120 is composed of the thermal head 115, the platen 107 and so on.

The reflection type sensor 117 is located near the thermal head 115. The reflection type sensor 117 emits a detection light toward the label sheet 201 which is conveyed on the conveying path 151, receives a reflection light reflected from the base sheet 202 or the label 203 by a receiving part, and transmits to the CPU 51 a detected level of the reflected light received by the receiving part. The CPU 51 detects whether or not the label 203 is positioned at the printing stand-by position P0 based on the detected level of the reflected light from the reflection type sensor 117 and a conveying distance of the label sheet 201 on the conveying path 151 by driving the conveying mechanism 141. That is, the reflection type sensor 117 and the CPU 151 play a role of a printing position detector for detecting whether or not the label 203 is positioned at the printing stand-by position P0.

The RFID reader/writer 121 is positioned at between the conveying roller 106 and the re-winder 108, and at a lower surface side which is one surface side of the conveying path 151, and fixed to the printer main body 101. The RFID reader/writer 121 provides a reader/writer antenna in its inside and executes radio communication to a RFID tag, which is included in a label 203 positioned at the writing position W and a position closest to the writing position W, and executes a writing of RFID data transmitted from the CPU 51.

Here, the printing stand-by position P0 which corresponds to the printer 120 (see Fig. 1), and the writing position W which corresponds to the RFID reader/writer 121 (see Fig. 1) are separate by a distance of kT (k is natural number). That is, between the printing stand-by position P0 and the writing position W, k sheets of labels 203 can be positioned.

The reflection type sensor 118 is located near the RFID reader/writer 121. The reflection type sensor 118 emits a reflection light toward an upside surface of the label sheet 201 conveyed on the conveying path 151, receives by a receiving part a reflected light reflected by the base sheet 202 and the label 203 and transmits to the CPU 51 a detected level of the reflected light received by the receiving part. The CPU 51 detects whether or not the label 203 is positioned at the writing position W based on a change of the detected level of the reflected light input from the reflection type sensor 118 and a conveying distance The label sheet 201 on the conveying path 151 by driving the conveying mechanism 141. That is, the reflection type sensor 118 and the CPU 51 play a role as a writing position detector for detecting whether or not the label 203 is positioned at the writing position W.

Fig. 3 is a block diagram showing a hardware structure of the label printer 1. The label printer 1 provides the CPU 51 which executes various arithmetic processing to control each part. A ROM 52 for storing fixed data and a RAM 53 used as a working area for storing variable data rewritably are bus connected to the CPU 51. The CPU 51, the ROM 52 and the RAM 53 constitute a microcomputer 50 as a controller for executing information processing to drive and control each part. The microcomputer 50 executes various processing by using the RAM 53 as a working area according to a program code which is a computer program stored as a firmware in the RAM 52, for example. The RAM 53 is not only used as a working area but also used as a memory for storing various information transmitted from a computer 60 described later. The various information transmitted from the computer 60 includes, for example, a plurality of data sets 401 corresponding to each printed issued label 203and these data sets 401 are temporally stored in the RAM 53. Specific explanation of the data sets 401 will be performed with reference to Fig. 4 later.

A head driving part 54 for driving and controlling the thermal head 115 and the motor 55, a sensor circuit 57 including the previously described reflection type sensors 117 and 118, the RFID reader/writer 121 and a communication interface 56 are connected to the CPU 51 via various input/output circuits (none are shown) respectively and are operated and controlled by the microcomputer 50.

The head driving part 54 is a digital circuit for driving and controlling the thermal head 115 and the motor 55 based on printing data. Such the head driving part 54 is an assembly of elements constituted by semiconductor technology, for example. The motor 55 is a driving source for rotatably driving the conveying roller 106, the platen 107, the re-winder 108, the ribbon winder shaft 109 and so on. The motor 55 is, for example, a stepping motor rotating forward and backward.

The sensor circuit 57 supplies power to the reflection type sensors 117 and 118 and converts a sensing signal transmitted from the reflection type sensors 117 and 118 to a digital signal, and transmits it to the microcomputer 50.

The communication interface 56 realizes data communication to the computer 60 as an external device via communication cable 58.

The computer 60 generates the data sets 401 described before and transmits it to the label printer 1. The computer 60 is composed of the CPU 61, the ROM 62, the RAM 63 as a memory, a HDD 64, a CD-ROM drive 65, the communication interface 66 and so on, and connects to the label printer 1 data communicatably. The HDD 64 of the computer 60 stores a program which realizes various functions. The CPU 61 executes various information processing based on a description of the stored program.

Fig. 4 is a schematic view showing a data structure of the data sets 401 stored in the RAM 53. The data set 401 is a set of a data sequence 404 which makes a pair of a data identifier 402 and corresponding actual data 403. The data identifier 402 includes an identifier [TEXT] which shows the actual data 403 is a letter to be printed on the label 203, an identifier [BARCODE] which shows the actual data 403 is a structure of barcode to be printed on the label 203 and an identifier [RFID] which shows the actual data 403 is RFID data to be written to the RFID tag 206. In the data sequences 404 included in the data sets 401, the data sequence 404 whose data identifier 402 is [TEXT] and the data sequence 404 whose data identifier 402 is [BARCOED] constitute printing data 410 to be printed on the label 203 by the printer 120. Also, in the data sequences 404 included in the data sets 401, the data sequence 404 whose data identifier 402 is [RFID] constitutes RFID data 411 to be written to the RFID tag 206 included in the label 203 by the RFID reader/writer 121.

The data set 401 is generated by the computer 60 and is transmitted to the label printer 1. When the CPU 51 of the label printer 1 receives the data set 401 transmitted by the computer 60, the CPU 51 stores the received data to the RAM 53 in the order of receiving. A storing order of the data sets 401 corresponds to an order of the labels 203 affixed on the label sheet 201 in series.

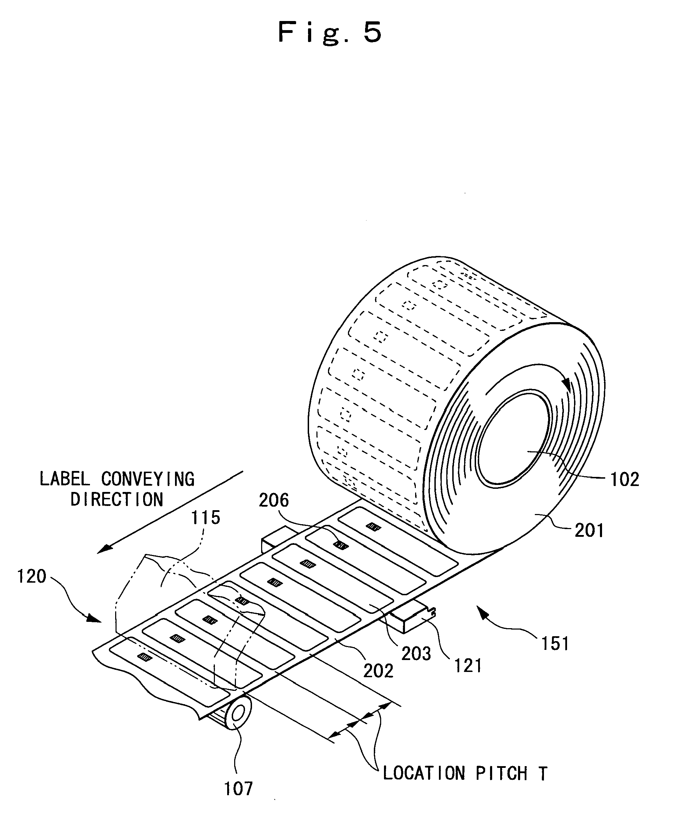

Fig. 5 is an exterior perspective view showing the label sheet 201. Here, Fig. 5 also shows a location relationship of the label sheet 201, the RFID reader/writer and the printer 120.

The label sheet 201 is held to the label sheet holding shaft 102 in a rolled state. A plurality of labels 203 is affixed in series with a certain pitch T on the base sheet 202 of the label sheet 201. The RFID tag 206 is disposed in each label 203. The RFID tag 206 is a passive type tag, which does not have a battery. When an antenna, which constitutes the RFID tag 206, receives magnetic field generated from a reader/writer antenna provided in the RFID reader/writer 121, electric power is generated in the RFID tag 206 to initiate itself. A radio communication is executed between the RFID tag 206 and the RFID reader/writer 121.

The printer 120, which is composed of the thermal head 115, the platen 107, and so on, is located at a more downstream side than the RFID reader/writer 121 on the conveying path 151.

A label issuance process executed by the CPU 51 of the label printer 1 which provides such the structure above will be explained hereinafter.

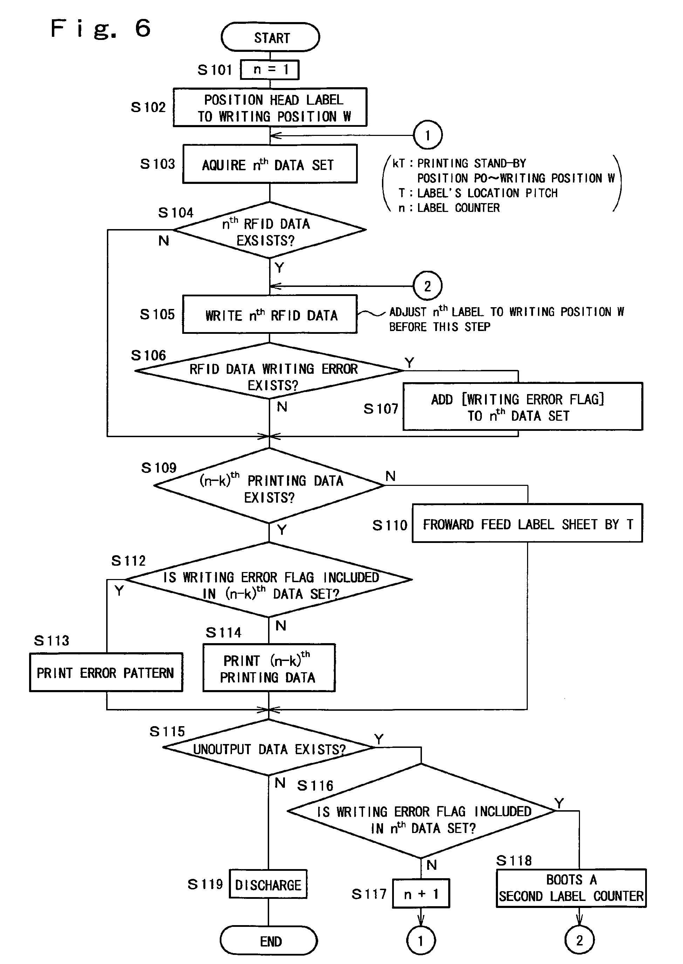

Fig. 6 is a flowchart showing a flow of a label issuance process in the label printer 1. The CPU 51 of the label printer 1 starts the label issuance process upon a receipt of a label printing issuance instruction accompanied with a plurality of data sets 401 from the computer 60 via the communication interface 56.

When starting the label issuance process, the CPU 51 sets a label counter n to be 1 (n = 1) as an initial setting process. The label counter n shows which number from the head of the label sheet 201 is executed printing based on the printing data and writing the RFID data.

As a following process, the CPU 51 controls the conveying mechanism 141 to convey the label sheet 201 toward upstream on the conveying path 151 by a distance kT which is the distance between the printing stand-by position P0 and the writing position W, and positions the label L1 which is the head of the label sheet 201 to the writing position W (step S102).

Followed by the above process, the CPU 51 acquires printing data DLₙ and RFID data DRₙ included in a data set Dₙ (the second data set) stored in the nth from the data sets 401 stored in the RAM 53 (step S103).

Followed by that, the CPU 51 determines whether or not there is the RFID data DRₙ corresponding to n^{th} label Lₙ (the second label) (step S104). When it is determined that there is no RFID data DRₙ (N of step S104), the CPU 51 goes to a process of step S109. As an example where no RFID data DRn exists, there is a case that last printing data is printed on a label Lₙ₋ₖ which is positioned at the printing stand-by position P0. In this case, there is no data to be written to the RFID tags Rₙ₋ₖ₊₁, Rₙ₋ₖ₊₂, ···, included in the labels Lₙ₋ₖ₊₁, Lₙ₋ₖ₊₂, ···, positioned at a more upstream side than the label Lₙ₋ₖ positioned at the printing stand-by position P0. Therefore, following steps S105 to S107 are skipped.

On the other hand, when it is determined that there is RFID data DRₙ (Y of step S104), the CPU 51 controls the RFID reader/writer 121 to write the RFID data DRₙ to the RFID tag Rₙ included in the label Lₙ positioned at the writing position W (step S105).

Here, when executing the process of step S105, the CPU 51 determines the detected level of the reflection light input from the reflection type sensor 118 which constitutes the writing position detector, and determines whether or not the label Lₙ is positioned at the writing position W. When the CPU 51 determines that the label L₁ is not positioned at the writing position W, the CPU 51 drives and controls the conveying mechanism 141 to feed back or feed forward the label sheet 201 to adjust its position and to position the label Lₙ to the writing position W precisely. As another example, when executing the process of step S105, the CPU 51 calculates a total conveying distance of the label sheet 201 from the start of the label issuance process, compares the total conveying distance and the distance kT which is a distance between the printing stand-by position P0 and the writing position W and adjusts the position of the label sheet 201 by driving and controlling the conveying mechanism 141 based on a result of the comparison to position the label Lₙ to the writing position W precisely. Since a communicatable range of RFID communication by the RFID reader/writer 121 is in a neighborhood central around the writing central position W0 (See Fig. 1), it is not always necessary to position the label Lₙ to the writing position W precisely. However, by positioning the label Lₙ to the writing position W precisely, the RFID reader/writer 121 is capable of executing the RFID communication with the RFID tag Rₙ included in the label Lₙ securely.

As a following step of the step S105, the CPU 51 reads the RFID data DRₙ by the RFID reader/writer 121 again, which was written to the RFID tag Rₙ at the step S105, compares the read data and the written data to determine whether or not there is an writing error (step S106). When it is determined that there is a writing error (Y of step S106), the CPU 51 adds to the data set Dₙ an writing error flag which shows a data writing to the RFID tag Rₙ is failed (step S107) and goes to the process of step S109. On the other hand, when the CPU 51 determines that there is no writing error (N of step S106), the process goes to step S109.

As a step followed by N of step S104, N of step S106 or step S107, the CPU 51 determines whether or not printing data DLₙ₋ₖ corresponding to (n-k)^{th} label Lₙ₋ₖ which is positioned at the printing stand-by position P0 in the state where the label Lₙ is positioned at the writing position W (step S109). When it is determined that there is no printing data DLₙ₋ₖ (N of step S109), the CPU 51 drives and controls the conveying mechanism 141 to feed forward the label sheet 201 by the distance T which is the location pitch equivalent along the conveying path 151 (step S110) and proceeds to step S115. As an example of existing no label Lₙ₋ₖ, there is a case that the head label L₁ of the label sheet 201 is positioned at the writing position W.

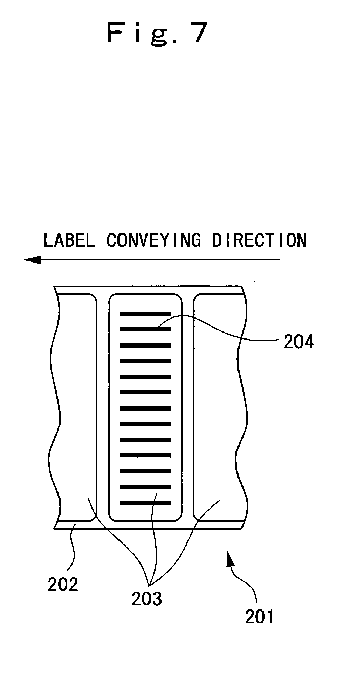

On the other hand, when it is determined that there is printing data DLₙ₋ₖ (Y of step S109), the CPU 51 determines whether or not a writing error flag is included in the data set Dₙ₋ₖ (step S112). When it is determined that a writing error flag is included (Y of step S112), CPU 51 controls the printer 120 to print a certain error pattern 204 (see Fig 7) to the label Lₙ₋ₖ positioned at the printing stand-by position P0 (step S113), while it is determined that there is no error flag is included (N of step S112), the CPU controls the printer 120 to print the printing data DLₙ₋ₖ included in the data set Dₙ₋ₖ to the label Lₙ (step S114).

As a result of the process shown in steps S110, S113 or S114 being executed, the label sheet 201 is shifted by the distance T which is the location pitch equivalent to the label 203 to a downstream side on the conveying path 151 so that a label Lₙ₊₁₋ₖ is positioned at the printing stand-by position P0 and a label Lₙ₊₁ is positioned at the writing position W.

As a step followed by the steps S110, S113 or S114, the CPU 51 determines whether or not there is either un-input printing data or un-input RFID data in the RAM 53 (step S115). When it is determined that there is un-input data in the RAM 53 (Y of step S115), the CPU 51 determines whether or not there a writing error flag is included in the data set Dₙ (step S116).

When it is determined that no writing error flag is included in the data set Dₙ (Y of step S116), the CPU 51 adds 1 to the label counter n (step S117) and goes back to the step S103 process.

On the other hand, when it is determined that a writing error flag is not included in the data set Dₙ (Y of step S116), the CPU 51 boots a second label counter (step S118). The second label counter is a counter which adds 1 to the label counter n when it is booted, and increments 1 by every process at steps S109 to S115 until the number of processing at steps S109 to 115 reaches to k. When the second label counter is booted, the steps S109, S112 and S114 adopt the second label counter' s value as value n preceding the label counter' s value. After booting the second label counter (step S118), the CPU 51 transfers the processing to step S115. As a result, the value n of the label counter is not incremented, and a data writing based on the RFID data DRₙ included in the data set Dₙ (the second data set) to which an error happens is tried again. That is, when a writing error happens to the RFID data DRₙ included in the data set Dₙ (the second data set), an information writing is executed to the RFID tag Rₙ included in the following label Lₙ based on the RFID data DRₙ included in the data set Dₙ (the second data set) until it is determined no error happens (N of step S106). Then, printing data DLₙ₋ₖ to DLₙ₋₁ included in the data set Dₙ₋ₖ to Dₙ₋₁, which corresponds to the label Lₙ₋ₖ to Ln-1, or an error pattern (see step S113) can be securely printed on the label Lₙ₋ₖ to Ln-1 which precedes the label Lₙ, which includes the RFID Rₙ to which the error happens. This is because n value interpreted at step S109, S112 and S114 is the second label counter' s n value which is incremented until the number of processing at steps S109 to S115 reaches to k.

When it is determined that there is no un-input data in the RAM 53 (N of step S115), the CPU 51 drives the conveying mechanism 141 to discharge printed labels which remains in the label printer 1 (step S119) and terminates the label issuance process.

Fig. 7 is a schematic diagram showing an example of error pattern 203 printed in the label 203. When the CPU 51 determines an error occurs in a data writing to the RFID tag 206, the CPU 51 prints lateral stripe error pattern 204 on the label 203 including the RFID tag 206 as shown in Fig. 7 (step S113 in Fig. 6). A user of the printer 1 can see the error pattern 204 printed on the label 203 and can recognize visually an error happens to the RFID tag 206 included in the label 203.

As explained above, according to the label printer 1 of this embodiment, the printing data DLₙ₋ₖ included in the data set Dₙ₋ₖ which corresponds to the label Lₙ₋ₖ is printed to the label Lₙ₋ₖ positioned at the printing stand-by position P0, and in this state, RFID data DRₙ₋ₖ included in the data set Dₙ₋ₖ which corresponds to the label Lₙ is written to the RFID tag Rₙ included in the label Lₙ positioned at a nearest position to the writing position W in a series of label printing and issuance process including data writing and printing. That is, the order of data writing and printing is determined according to the arrangement position of the printer 120 and the RFID reader/writer 121, instead of executing conventional data writing and printing by an order of data set transmitted from the computer 60. Consequently, a conveying distance of the label 201 can be decreased in the process of one sheet of label 203 being printed and issued so that the label printing and issuance efficiency of the label printer 1 which executes data writing and printing to the label 203 including the RFID tag 206 can be increased.

Further, according to the label printer 1 of the present embodiment, when a data writing to the RFID tag 206 is executed, the conveying mechanism 141 is driven to adjust the position of the label sheet 201 (by feeding back or feeding forward) so as to position the label Lₙ to the writing position precisely. Therefore, a secure RFID communication can be executed by the RFID reader/writer 121 with respect to the RDIF tag 206 included in the label 203, and a data writing error to the RFID tag 206 can be prevented.

Here, in this embodiment, when the process of step S113 is executed, the error pattern 204 printed on the label 203 can be stored either in the ROM 52, the RAM 53 of the label printer 1, or in the ROM 62, the RAM 63, the HDD 64 and so on of the computer 60.

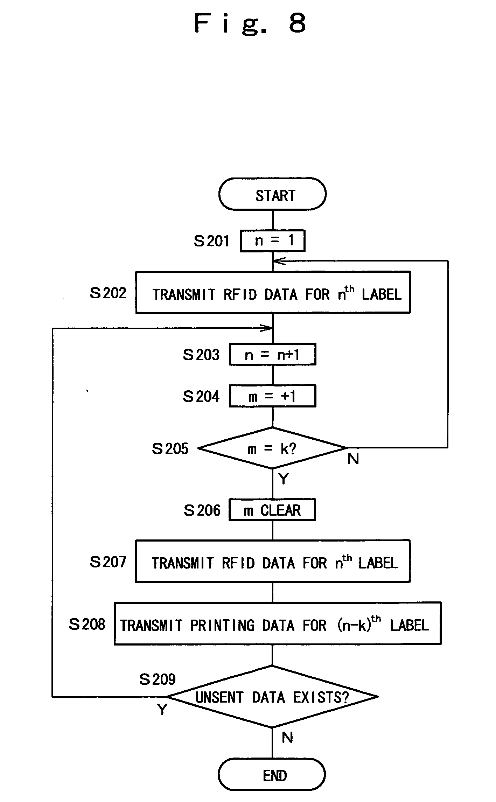

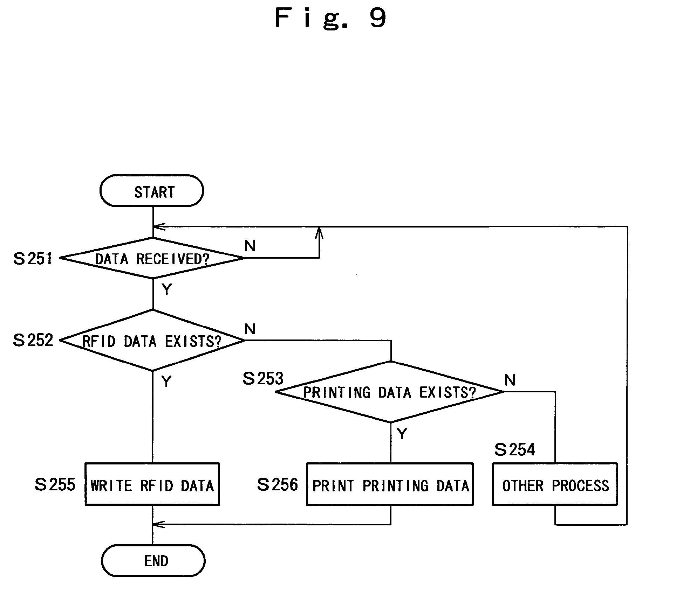

Next, another embodiment of the present invention will be explained with reference to Figs. 8 and 9. In this embodiment, reference numerals used in the previous embodiment described with reference to Figs. 1 to 7 will be used to designate the same elements, and the overlapping explanation will be omitted.

In the computer 60 of the present embodiment which is data communicatably connected to the label printer 1, a program which executes the following steps is installed:
(A) a function (a step) for corresponding printing data 410 to be printed on the label 203 and RFID data 411 to be written to the RFID tag 206 and for storing the data to the RAM 63 of the computer 60 by every plurality of the labels 203
(B) a function (a step) for transmitting to the label printer 1 the RFID data 411 corresponding to the RFID tag 206 included in the first label 203 to be printed first from the data stored in the RAM 63
(C) a function (a step) for transmitting to the label printer 1 the printing data 410 corresponding to the first label 203 printed first from the data stored in the RAM 63
(D) a function (a step) for transmitting to the label printer 1 the RFID data 411 corresponding to the RFID tag 206 included in the second label 203 to be printer later than the first label 203 from the data stored in the RAM 63

The CPU 61 of the computer 60 executes a data transmission process with respect to the label printer 1 according to description of the program (see Fig. 8). The CPU 51 of the label printer 1 receives data transmitted from the computer 60 and executes the label issuance process (see Fig. 9). Hereinafter, a data transmission process in the computer 60 and a label issuance process in the label printer 1 will be explained.

Fig. 8 is a flowchart showing a data transmission process in the computer 60 for transmitting data to the label printer 1.

The RAM 63 of the computer 60 in the present embodiment stores format data including location information which shows where the printing stand-by position P0, which corresponds to the printer 120 on the conveying path 151 of the label printer 1, and the writing position W, which corresponds to the RFID reader/writer 121 position on the conveying path 151, are. The format data is provided by printer manufacturers as a driver file or an initial setting information file, for example. Also, the format data can be, for example, defined by a user of the computer 60 as he/she thinks proper by using an input device such as a keyboard (not shown) provided to the computer 60.

The computer 60 has a function for editing the printing data 410 to be printed on the label 203 and the RFID data 411 to be written to the RFID tag 206 included in the label 203 as an example. The computer 60 corresponds and stores an edited printing data 410 and RFID data 411 to the RAM 63 by every plurality of the labels 203. Fig. 8 describes the data transmission process of the printing data 410 and the RFID data 411 stored in the RAM 63.

As shown in Fig. 8, the CPU 61 of the computer 60 sets n = 1 to the RAM 63 (step S201). Then, RFID data 411 for the n^{th} label 203 is transmitted to the label printer 1 (step S202) by the communication interface 66 (step S202) and n = N + 1 is set (step S203).

Followed by that, the CPU 61 of the computer 60 increments m by 1, which is to be set in the RAM 63 (step S204). Then, the CPU 61 determines whether or not m = k (step S205). When m is not k (N of step S205), the process is returned to step S202 and a process to transmit to the label printer 1 the RFID data 411 for the n^{th} label 203, which has been incremented at step S203, is executed. As explained above, the printing stand-by position P0 corresponding to the printer 120 (see Fig. 1), and the writing position W corresponding to the RFID reader/writer 121 (see Fig. 1) are separate by the distance kT (k is natural number). That is, between the printing stand-by position P0 and the writing position W, k sheets of labels 203 can be positioned. Thus, through the process of steps S204 to S205, the RFID data 411 for the n^{th} label 203 is transmitted to the label printer 1 until the number of label 203 becomes k.

When it is determined that m = k (Y of step S205), the CPU 61 of the computer 60 clears m (step S206) and transmits to the label printer 1 the RFID data 411 corresponding to the RFID tag 206 included in the n^{th} label 203 (the second label) (step S207). After that, the CPU 61 transmits to the label printer 1 the printing data 410 for the (n-k)^{th} label 203 (the first label) (step S208).

The CPU 61 of the computer 60 repeats the process of steps S203 to S208 described above until no unsent data exists in the data stored in the RAM 63 (Y of step S209). When no un transmission data exists (N of step S209), the data transmission process is terminated.

Fig. 9 is a flowchart showing a flow of the label issuance process in the label printer 1. When it is determined that data is received via the communication interface 56 (Y of step S251), the CPU 51 of the label printer 1 determines a type of the received data (steps S252 to S254).

At the determination process described above (steps S252 to S254), when it is determined that the RFID data 411 is received (Y of step S252), the CPU 51 drives and controls the RFID reader/writer 121 and executes a writing process of the RFID data 411 to the RFID tag 206 (step S255).

At the determination process described above (steps S252 to S254), when it is determined that the printing data 410 is received (Y of step S253), the CPU 51 drives and controls the head driving part 54 to execute a printing process based on the printing data 410 by the printer 120 (step S256).

When other process is determined at the above determination process (steps S252 to S254), corresponding process is executed (step S254).

As described above, as a result of the process being executed by the computer 60 and the label printer 1, the printer 120 and the RFID reader/writer 121 execute the same operation as the embodiment previously explained with reference to Figs. 1 to 7. This will be explained by using the example shown in Fig. 1.

The RFID data 411 is [0001R] in the example of Fig. 1, which is transmitted to the label printer 1 in the process firstly executed at step S202 by the CPU 61 of the computer 60 (see Fig. 8) and is determined to receive at step S252 by the CPU 51 of the label printer 1 (see Fig. 9). The label printer 1 drives and controls the RFID reader/writer 121 (step S255 in Fig. 9) to write the RFID data 411 [0001R] to the RFID tag R₁, that the first label L₁ has (see Fig. 1(b)).

The RFID data 411 is [0002R] in the example of Fig. 1, which is transmitted to the label printer 1 in the process at step 207 executed by the CPU 61 of the computer 60 (see Fig. 8) and is determined to receive at step S252 by the CPU 51 of the label printer 1 (see Fig. 9). The label printer 1 drives and controls the RFID reader/writer 121 (step S255 in Fig. 9) to write the RFID data 411 [0002R] to the RFID tag R₂, that the label L₂ has, which is followed by the first label L₁ (see Fig. 1(c)).

Next, the printing data 410 is [0001L] in the example of Fig. 1, which is transmitted to the label printer 1 in the process executed at step S208 by the CPU 61 of the computer 60 (see Fig. 8) and is determined to receive at step S253 by the CPU 51 of the label printer 1 (see Fig. 9). The label printer 1 drives and controls the printer 120 (step S256 in Fig. 9) to print the printing data 410 [0001L] to the first label L₁ (see Fig. 1(c)).

Next, the RFID data 411 is [0003R] in the example of Fig. 1, which is transmitted to the label printer 1 in the process executed at step S207 by the CPU 61 of the computer 60 (see Fig. 8) and is determined to receive at step S252 by the CPU 51 of the label printer 1 (see Fig. 9). The label printer 1 drives and controls the RFID reader/writer 121 (step S255 in Fig. 9) to write the RFID data 411 [0003R] to the RFID tag R₃, that label L₃ has, which is followed by the label L₂ (see Fig. 1(d)).

Next, the printing data 410 is [0002L] in the example of Fig. 1, which is transmitted to the label printer 1 in the process executed at step S208 by the CPU 61 of the computer 60 (see Fig. 8) and is determined to receive at step S253 by the CPU 51 of the label printer 1 (see Fig. 9). The label printer 1 drives and controls the printer 120 (step S256 in Fig. 9) to print the printing data 410 [0002L] to the label L₂, which is followed by the label L₁ (see Fig. 1(d)).

Consequently, the printing to the label 203 by the printer 120 and the data writing to the RFID tag 206 included in the label 203 are executed without feeding back the base sheet 202. Even if it is necessary to feed back the base sheet 202, an amount of feeding back can be greatly reduced. As a result, label printing and issuance efficiency of the label printer 1 for executing data writing and printing with respect to the label 203 providing the RFID tag 206 can be increased.

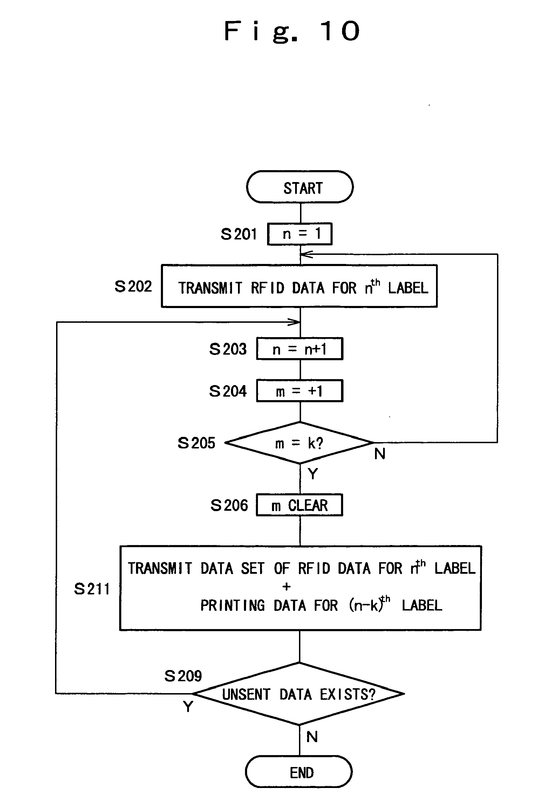

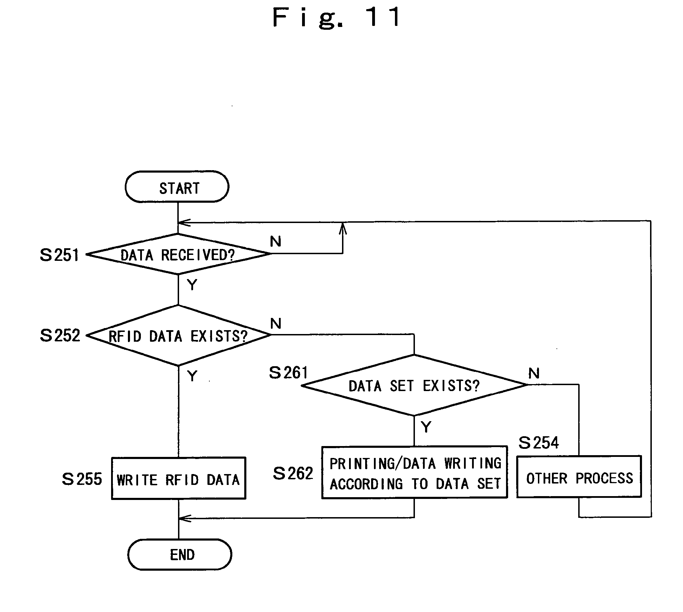

Next, still another embodiment of the present invention will be explained with reference to Figs. 10 and 11. Reference numerals used in the previous embodiment described with reference to Figs. 8 and 9 will be used to designate the same elements, and the overlapping explanation will be omitted.

Fig. 10 is a flowchart showing a data transmission process in the computer 60 for executing data transmission to the label printer 1. In the computer 60 of the present embodiment which is data communicatably connected to the label printer 1, a program which executes the following steps is installed:
(A) a function (a step) for corresponding printing data 410 to be printed on the label 203, and RFID data 411 to be written to the RFID tag 206 and for storing the data to the RAM 63 of the computer 60 by every plurality of the labels 203
(B) a function (a step) for transmitting to the label printer 1 the RFID data 411 from the data stored in the RAM 63, which corresponds to the RFID tag 206 included in the first label 203 to be printed first
(C) a function (a step) for transmitting to the label printer 1 the data set 401 which is a set of the printing data 410 corresponding to the first label 203 to be printed first, and the RFID tag 206 included in the second label 203 to be printed later than the first label 203

Therefore, basically, the CPU 61 of the computer 60 executes approximately the same process as the processes shown in Fig. 8. The different point is a process of step S211 is executed instead of steps S207 and S208. The process of step S211 is to generate a data set 401 which is a set of the RFID data 411 corresponding to the RFID tag 206 included in the n^{th} label 203 (the second label), and the printing data 410 for the (n-k)^{th} label 203 (the first label) and to transmit the data set 401 to the label printer 1.

Fig. 11 is a flowchart showing a flow of a label issuance process in the label printer 1. Basically, the label printer 1 also executes approximately the same process as the process shown in Fig. 9. That is, the CPU 61 of the label printer 1 determines a receipt of the data set 401 instead of the receipt determination process of the printing data 410 at step S253 (step S261). Then, the CPU 61 executes a printing process by the printer 120 and a writing process of the RFID data 411 by the RFID reader/writer 121 according to the received data set 401 (step S262).

As a result of the process being executed by the computer 60 and the label printer 1, the printer 120 and the RFID reader/writer 121 execute the same operation as the embodiment previously explained with reference to Figs. 1 to 7. This will be explained with an example shown in Fig. 1.

The RFID data 411 is [0001R] in the example of Fig. 1, which is transmitted to the label printer 1 through the process firstly executed by the CPU 61 of the computer 60 at step S202 (see Fig. 10), and is determined to receive by the CPU 51 of the label printer 1 at step S252 (see Fig. 11). The label printer 1 drives and controls the RFID reader/writer 121 (step S255 of Fig. 11) and writes the RFID data 411 [0001R] to the RFID tag R₁ that the first label L₁ has (see Fig. 1(b)).

Next, the RFID data 411 is [0002R] in the example of Fig. 1, which is transmitted to the label printer 1 through the process executed by the CPU 61 of the computer 60 at step S211 (see Fig. 10), and is included in the data set 401 which is determined to receive by the CPU 51 of the label printer 1 at step S261 (see Fig. 11). Also, the printing data 410 included in the data set 401 is [0001L] in the example of Fig. 1. The label printer 1 drives and controls the RFID reader/writer 121 (step S262 of Fig. 11) and writes the RFID data 411 [0002R] to the RFID tag R₂ that the label L₂ has, which follows the first label L₁ (see Fig. 1(c)). Then, the label printer 1 drives and controls the printer 120 (step S262 of Fig. 11) and prints the printing data [0001L] to the first label L₁ (see Fig. 1(c)).

Next, the RFID data 411 is [0003R] in the example of Fig. 1, which is transmitted to the label printer 1 through the process executed by the CPU 61 of the computer 60 at step S211 (see Fig. 10), and is included in the data set 401 which is determined to receive by the CPU 51 of the label printer 1 at step S261 (see Fig. 11). Also, the printing data 410 included in the data set 401 is [0002L] in the example of Fig. 1. The label printer 1 drives and controls the RFID reader/writer 121 (step S262 of Fig. 11) and writes the RFID data 411 [0003R] to the RFID tag R₃ that the label L3 has, which follows the label L₂ (see Fig. 1(d)). Then, the label printer 1 drives and controls the printer 120 (step S262 of Fig. 11) and prints the printing data [0002L] to the label L₂ which follows the label L₁ (see Fig. 1(d)).

Consequently, the printing to the label 203 by the printer 120 and the data writing to the RFID tag 206 included in the label 203 are executed without feeding back the base sheet 202. Even if it is necessary to feed back the base sheet 202, an amount of feeding back can be greatly reduced. As a result, label printing issuance efficiency of the label printer 1 for executing data writing and printing with respect to the label 203 providing the RFID tag 206 can be increased.

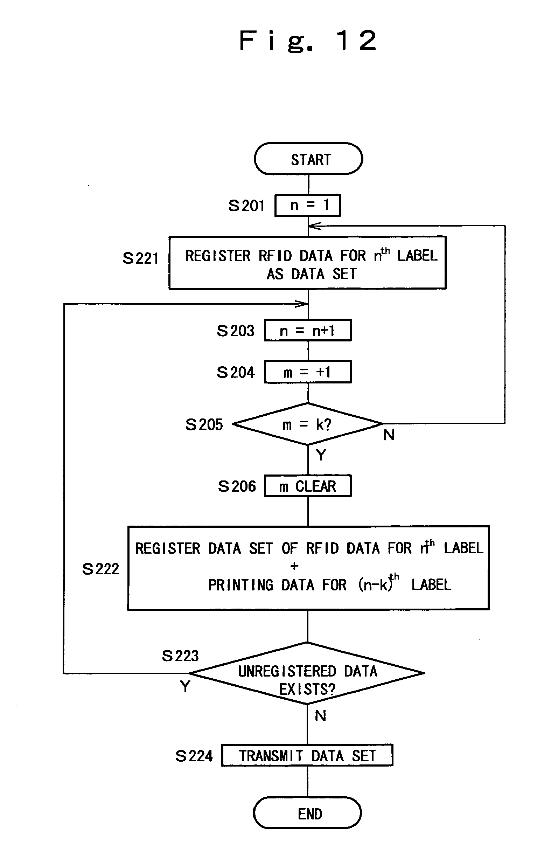

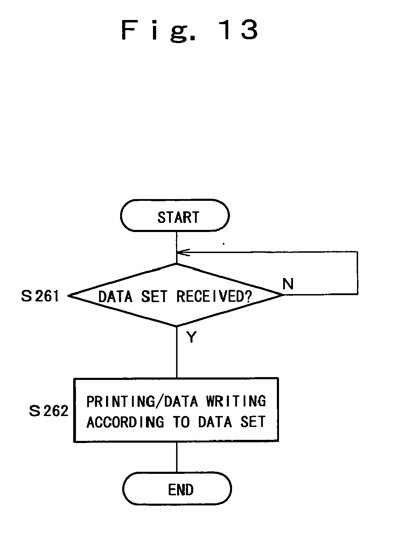

Next, still another embodiment of the present invention will be explained with reference to Figs. 12 and 13. Reference numerals used in the previous embodiment described with reference to Figs. 8 and 9 will be used to designate the same elements, and the overlapping explanation will be omitted.

Fig. 12 is a flowchart showing a flow of data transmission process in the computer 60 for executing a data transmission to the label printer 1. In the computer 60 of the present embodiment which is data communicatably connected to the label printer 1, a program which executes the following steps is installed:
(A) a function (a step) for corresponding printing data 410 to be printed on the label 203 and RFID data 411 to be written to the RFID tag 206, and for storing the data to the RAM 63 of the computer 60 by every plurality of the labels 203
(B) a function (a step) for transmitting to the label printer 1 altogether the data set 401 which includes the RFID data 411 corresponding to the RFID tag 206 included in the label 203 to be printed first, and the data set 401 which is a set of the printing data 410 corresponding to the first label 203 to be printed first and the RFID tag 206 included in the second label 203 to be printed later than the first label 203

Therefore, basically, the CPU 61 of the computer 60 executes approximately the same process as the process shown in Fig. 8. The different point is to execute the process of step S221 instead of the process of step S202 shown in Fig. 8, to execute the process of step S222 instead of the process of steps S207 and S208, and to execute the process of step S223 instead of the process of step S209, and additionally to execute the process of step S224. The process of step S221 is a process to register to the RAM 63 the RFID data 411 for the n^{th} label 203 as the data set 401. The process of step S222 is to generate the data set 401 which pairs up the RFID data 411 corresponding to the RFID tag 206 included in the n^{th} label 203 (the second label) with the printing data 410 for the (n-k)ₜₕ label 203 (the first label), and to register the data set 401 to the RAM 63. The process of step S223 is to determine whether or not there is un-registered data in the edited printing data 410 and the RFID data 411 temporarily stored in the RAM 63. The process of step S224 is to transmit to the label printer 1 the data set 401 generated at step S221 and the data set 401 generated at step S222 altogether as a pair when it is determined that there is no un-registered data at step S223 (N of step S223).

Fig. 13 is a flowchart showing a flow of the label issuance process in the label printer 1. When it is determined that the data set 401 is received (Y of step S261), the label printer 1 executes a printing process by the printer 120 and a writing process of the RFID data 411 by the RFID reader/writer 121 according to the received data set 401 (step S262).

As a result of the process being executed by the computer 60 and the label printer 1, the printer 120 and the RFID reader/writer 121 execute the same operation as the embodiment previously explained with reference to Figs. 1 to 7. That is, the data set 401 is generated so as to execute the same operation as the embodiment executed by the printer 120 and the RFID reader/writer 121 previously explained with reference to Figs. 1 to 7. Therefore, the label printer 1 which receives the data set 401 executes the same operation as the embodiment previously explained with reference to Figs. 1 to 7.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A label printer, comprising:
a conveying mechanism (141) for conveying a label sheet (201), which is such that a plurality of labels (203) including a RFID tag (206) are affixed on a lengthy base sheet (202) with a certain pitch in a longitudinal direction of the base sheet, via a conveying path(151);
a printer (120) for executing a printing with respect to the label on the conveying path;
a RFID reader/writer (121) which is provided upstream of the printer on the conveying path, for executing an information reading and writing respect to a RFID tag included in the label; and
a communication interface (56) for executing a data transmitting and receiving with respect to an external device (60),
**characterized by**
a memory (53) for storing a plurality of data sets (401) which includes printing data (410, DL_{N}) to be printed on the label and RFID data (411, DR_{N}) to be written to the RFID tag received from the external device via the communication interface, and
a controller (50) repeating a process of driving and controlling the RFID reader/writer so as to execute an information writing to the RFID tag (R₂) of a second label (203, L₂) positioned upstream of a first label (203, L₁) on the conveying path based on the RFID data (411, DR₂) included in the data set (D₂) corresponding to the second label, and then driving and controlling the printer so as to execute a printing on the first label based on the printing data (410, DL₁) included in the data set (D₁) corresponding to the first label.

2. The label printer according to claim 1, wherein the controller drives and controls the conveying mechanism (141) to feed back or feed forward the base sheet (202) in order to position the RFID tag (R₂) included in the second label (203, L₂) to a writing position (W) by the RFID reader/writer (121).

3. The label printer according to claim 1 or 2,
wherein the controller (50) determines whether or not a writing error of the RFID data (411, DR_{N}) included in the second data set happens and allows the second data set to include error information which shows the writing error happens in the second data set when the writing error happens,
wherein the controller determines whether or not the error information is included in the second data set at a time of printing based on the printing data (DL_{N}) included in the second data set and allows the second label (203, L₂) to be printed an error pattern (204) when the error information is included.

4. The label printer according to one of claims 1 to 3, wherein the controller (50) executes an information writing to the RFID tag (206, R₃) included in the label (203, L₃) following the second label (203, L₂) based on the RFID data (411, R_{N}) included in the second data set when a writing error happens to the RFID data included in the second data set.

5. A method for causing a computer (60) that transmits data via a communication interface (56) to a label printer (1) having a printing function to a label (203) based on printing data (410, DL_{N}) and an information writing function to a RFID tag (206) based on RFID data (411, DR_{N}) with respect to a label sheet (201) which is such that a plurality of the labels including the RFID tag are affixed on a lengthy base sheet (202) with a certain pitch in a longitudinal direction of the base sheet, the method executes:
a step of corresponding printing data to be printed on the label and RFID data to be written to the RFID tag, and for storing the printing data and the RFID data to a memory (63) by every plurality of the labels;
a step of transmitting to the label printer in sequence from the data stored in the memory the RFID data corresponding to the RFID tags included in the labels from a first label to be printed first to a label which is positioned between a printing stand-by position (P0) and an information writing position (W); and
a step of repeating a process of transmitting to the label printer the RFID data (411, DR₂) corresponding to the RFID tag of a second label (203, L₂) positioned upstream of a first label (203, L₁) on the conveying path, and then transmitting to the label printer the printing data (410, DL₁) corresponding to the first label.

6. A method for causing a computer (60) that transmits data via a communication interface (56) to a label printer (1) having a printing function to a label (203) based on printing data (410, DL_{N}) and an information writing function to a RFID tag (206) based on RFID data (411, DR_{N}) with respect to a label sheet (201) which is such that a plurality of the labels including the RFID tag are affixed on a lengthy base sheet (202) with a certain pitch in a longitudinal direction of the base sheet, the method executes:
a step of corresponding printing data (410, DL_{N}) to be printed on the label and RFID data (411, DR_{N}) to be written to the RFID tag, and for storing the printing data and the RFID data to a memory (63) by every plurality of the labels;
a step of transmitting to the label printer from the data stored in the memory in sequence one piece or more than one piece of the RFID data corresponding to the RFID data included in the labels from a first label (203, L₁) to be printed first to a label positioned between a printing stand-by position (P0) and an information writing position (W); and
a step of transmitting a data set which pairs up from the data stored in the memory the RFID data (411, DR₂) corresponding to the RFID tag of a second label (203, L₂) positioned upstream of a first label (203, L₁) on the conveying path and the printing data (410, DL₁) corresponding to the first label.

7. A method for causing a computer (60) that transmits data via a communication interface (56) to a label printer (1) having a printing function to a label (203) based on printing data (410, DL_{N}) and an information writing function to a RFID tag (206) based on RFID data (411, DR_{N}) with respect to a label sheet (201) which is such that a plurality of the labels including the RFID tag are affixed on a lengthy base sheet (202) with a certain pitch in a longitudinal direction of the base sheet, the method executes:
a step of corresponding printing data (410, DL_{N}) to be printed on the label and RFID data (411, DR_{N}) to be written to the RFID tag, and for storing the printing data and the RFID data to a memory (63) by every plurality of the labels; and
a step of transmitting to the label printer altogether from the data stored in the memory a data set which pairs up a data set including the RFID data corresponding to one piece or more than one piece of the RFID tag included in the labels from a first label (203, L₁) to be printed first to a label positioned between a printing stand-by position (P0) and an information writing position (W), and the RFID data (411, DR₂) corresponding to the RFID tag of a second label (203, L₂) positioned upstream of a first label (203, L₁) on the conveying path and the printing data (410, DL₁) corresponding to the first label.
